(19) Europäisches Patentamt European Patent Office Office européen des brevets

(11) **EP 2 095 467 B1**

(12) **FASCICULE DE BREVET EUROPEEN**

(45) Date de publication et mention de la délivrance du brevet:
**21.10.2015 Bulletin 2015/43**

(21) Numéro de dépôt: **07870316.2**

(22) Date de dépôt: **21.11.2007**

(51) Int Cl.:
*H01Q 13/02* *(2006.01)*    *G01N 22/00* *(2006.01)*

(86) Numéro de dépôt international:
**PCT/FR2007/001912**

(87) Numéro de publication internationale:
**WO 2008/071863 (19.06.2008 Gazette 2008/25)**

(54) **ANTENNE ET EMETTEUR/RECEPTEUR TERAHERTZ INTEGRES, ET PROCEDE POUR LEUR FABRICATION.**

INTEGRIERTE TERAHERTZ-ANTENNE UND SENDE-/EMPFANGSEINRICHTUNG SOWIE HERSTELLUNGSVERFAHREN DAFÜR

INTEGRATED TERAHERTZ ANTENNA AND EMITTER/RECEIVER, AND METHOD FOR PRODUCING SAME

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **21.11.2006 FR 0610164**

(43) Date de publication de la demande:
**02.09.2009 Bulletin 2009/36**

(73) Titulaire: **Centre National de la Recherche Scientifique**
**75016 Paris (FR)**

(72) Inventeurs:
• **LAMPIN, Jean-François Fernand**
**59242 Templeuve (FR)**
• **PEYTAVIT, Emilien Pascal**
**59110 La Madeleine (FR)**

(74) Mandataire: **Reboussin, Yohann Mickaël Noël et al**
**Cabinet Orès**
**36, rue de St Pétersbourg**
**75008 Paris (FR)**

(56) Documents cités:
**WO-A-2006/011668     US-B1- 6 323 818**

• **CLARK T-C NGUYEN ET AL: "Micromachined Devices for Wireless Communications" PROCEEDINGS OF THE IEEE, IEEE. NEW YORK, US, vol. 86, no. 8, août 1998 (1998-08), XP011044074 ISSN: 0018-9219**
• **YONG-KYU YOON ET AL: "Surface-micromachined millimeter-wave antennas" SOLID-STATE SENSORS, ACTUATORS AND MICROSYSTEMS, 2005. DIGEST OF TECHNICAL PAPERS. TRANSDUCERS '05. THE 13TH INTERNATIONAL CONFERENCE ON SEOUL, KOREA JUNE 5-9, 2005, PISCATAWAY, NJ, USA, IEEE, 5 juin 2005 (2005-06-05), pages 1986-1989, XP010828758 ISBN: 0-7803-8994-8**

EP 2 095 467 B1

**Description**

L'invention porte sur une antenne intégrée pour l'émission et/ou la réception de rayonnement Terahertz, ainsi que sur un dispositif émetteur et/ou récepteur de rayonnement Terahertz comportant une telle antenne et sur un procédé de fabrication de ladite antenne et dudit dispositif.

Par rayonnement Terahertz on entend un rayonnement électromagnétique dont la fréquence est comprise entre 100 GHz et 3 THz environ (1 THz = $10^{12}$ Hz = 1000 GHz Dans un sens plus restreint, rayonnement Terahertz est pris comme synonyme de rayonnement submillimétrique, c'est à dire ayant une longueur d'onde comprise entre 100 $\mu$m et 1 mm environ (fréquence approximativement comprise entre 300 GHz et 3 THz).

Le rayonnement Terahertz constitue un domaine spectral intermédiaire entre les micro-ondes et l'infrarouge. Ses applications, longtemps marginales voire inexistantes, sont actuellement en plein essor. Parmi ces applications, les plus importantes sont la spectroscopie et l'imagerie pour la détection de polluants, pour le contrôle non destructif et pour le diagnostic médical. Ces applications utilisent généralement un rayonnement Terahertz se propageant en espace libre : il est donc nécessaire de réaliser des émetteur et des récepteurs munis d'une antenne.

Les antennes généralement utilisées aux fréquences Terahertz sont des antennes planaires, typiquement de type dipolaire (dipôle de Hertz), réalisées de manière monolithique sur le substrat dans lequel sont intégrés les composants actifs utilisés pour la génération ou la détection du rayonnement et comportant une lentille hémisphérique en silicium disposée sur la face arrière du substrat. De telles antennes sont décrites notamment dans le document US 5,789,750 et dans l'article de G. M. Rebeiz « Millimeter-Wave and Terahertz Integrated Circuit Antennas », Proceedings of the IEEE, Vol. 80, No. 11, page 1748 (1992).

Ces dispositifs présentent de nombreux inconvénients.

Premièrement, la réalisation de la lentille en silicium et son positionnement sur le substrat avec une précision de l'ordre d'un micron par rapport à l'antenne est très délicate et coûteuse. D'autre part, l'utilisation d'une lentille de couplage est indispensable pour éviter que le rayonnement, principalement émis dans le substrat semiconducteur, ne soit piégé dans ce dernier. En fait, malgré la présence d'une telle lentille, seulement 21% environ de la puissance émise par une antenne planaire type est effectivement rayonnée en espace libre, le reste étant piégé et absorbé par le substrat.

En outre, l'antenne planaire la plus utilisée, le dipôle de Hertz, présente une efficacité faible et qui, de plus, dépend fortement de la fréquence. Malgré le fait que ces antennes ne soient pas réellement « à large bande », elles ont permis, à ce jour, d'obtenir les meilleurs résultats en spectroscopie Terahertz impulsionnelle. Par contre, leur médiocre efficacité les rend inadaptées à l'utilisation en régime continu, où les puissances en jeu sont très faibles.

Le document US 4,855,749 décrit une antenne planaire de type Vivaldi réalisée sur substrat en silicium, fonctionnant dans le domaine Terahertz et ne nécessitant pas de lentille de couplage. Les résultats obtenus à l'aide d'une telle antenne ne sont pas entièrement satisfaisants, notamment du point de vue de l'efficacité énergétique et de la dispersion importante des impulsions.

Le document US2006/0152412 décrit une antenne planaire ayant une forme en spirale logarithmique. Une telle antenne présente une efficacité relativement bonne et une large bande, mais elle est très dispersive. Par conséquent, elle ne convient pas pour une utilisation en régime impulsionnel.

L'article de V. Lubecke et al., « Micromachining for Terahertz Applications » IEEE Trans. on Microwave Theory and Tech., Vol. 46, No. 11, page 1821 (1998), porte sur des antennes intégrées pour systèmes Terahertz réalisées à l'aide des techniques de la microtechnologie et surmontant les limitations des structures planaires. Cependant les solutions apportées par ces méthodes ne sont pas satisfaisantes en raison des coûts et de la complexité des procédés de fabrication et de la fragilité des structures obtenues. En outre, les techniques utilisées (gravure profonde, membrane diélectrique, etc.) conviennent essentiellement au silicium, matériau qui n'est pas spécialement indiqué pour les applications Terahertz.

Un but de l'invention est de remédier au moins certains inconvénients de l'art antérieur.

En particulier, un but de l'invention est de procurer une antenne pour l'émission ou la réception de rayonnement Terahertz présentant une efficacité plus élevée que les antennes planaires couramment utilisées.

Un autre but de l'invention est de procurer une antenne Terahertz qui soit facile et économique à fabriquer, même en grande série.

Un autre but de l'invention est de procurer une antenne Terahertz à très large bande et peu dispersive. Une telle antenne peut convenir pour une utilisation en régime impulsionnel avec des impulsions très brèves (picosecondes), mais également en régime continu, éventuellement accordable.

Encore un autre but de l'invention est de procurer un émetteur/récepteur monolithique pour rayonnement Terahertz, intégrant une telle antenne et au moins un dispositif de génération et/ou détection de rayonnement.

Encore un autre but de l'invention est de procurer un spectromètre pouvant fonctionner aussi bien en régime impulsionnel qu'en régime continu, et un analyseur de gaz basé sur un tel spectromètre.

Au moins un de ces buts est atteint par une antenne intégrée pour l'émission ou la réception de rayonnement dans une plage de fréquences comprise entre 100 GHz et 3 THz, caractérisée en ce qu'elle comporte : un plan de masse conducteur, déposé sur une surface dite supérieure d'un substrat diélectrique ou semi-conducteur ; un ruban conducteur s'étendant au-dessus dudit plan de masse et formant un angle avec ce dernier, de manière à former une structure rayonnante de type cornet à onde transverse électromagnétique (cornet TEM) ; et un guide d'onde planaire comportant au moins une première et une deuxième bande conductrice formées sur ladite surface supérieure du substrat, reliées respectivement audit ruban conducteur et audit plan de masse conducteur.

Selon des modes de réalisation particuliers de l'invention :

- La largeur dudit ruban conducteur et sa distance dudit plan de masse peuvent être variables dans une direction longitudinale, le rapport entre ladite largeur et ladite distance étant choisi de manière à réaliser une adaptation d'impédance entre ledit guide d'onde planaire et la structure rayonnante formée par le ruban et le plan de masse ; plus particulièrement, ce rapport peut se maintenir constant sur au moins une partie de la longueur dudit ruban conducteur.

Encore plus particulièrement, la largeur du ruban conducteur et sa distance du plan de masse peuvent augmenter linéairement suivant ladite direction longitudinale ; autrement dit ledit ruban conducteur peut présenter une forme sensiblement triangulaire, avec un demi angle au sommet qui est de préférence compris entre 5° et 70°.

L'angle compris entre ledit ruban conducteur et ledit plan de masse est de préférence compris entre 5° et 45°.

- Ledit guide d'onde planaire peut comporter également une troisième bande conductrice, également reliée audit plan de masse, la deuxième et la troisième bandes conductrices étant disposées symétriquement de part et d'autre de ladite première bande conductrice.
- Ledit ruban conducteur s'étendant au-dessus dudit plan de masse et formant un angle avec ce dernier peut avoir une longueur comprise entre 100 $\mu$m et 10 mm et de préférence entre 500 $\mu$m et 5 mm.
- L'antenne peut comporter également au moins une cale pour maintenir ledit ruban conducteur espacé dudit plan de masse.

Un autre objet de l'invention est un émetteur Terahertz comportant : une antenne telle que définie ci-dessus ; et au moins un dispositif de génération d'un signal électromagnétique de fréquence comprise entre 100 GHz et 3 THz, intégré sur le même substrat diélectrique ou semiconducteur que l'antenne; ledit guide d'onde planaire étant agencé pour transmettre ledit signal électromagnétique du dispositif de génération à la structure rayonnante formée par le ruban et le plan de masse.

Encore un autre objet de l'invention est un récepteur Terahertz comportant : une antenne telle que définie ci-dessus ; et au moins un dispositif de détection d'un signal électromagnétique de fréquence comprise entre 100 GHz et 3 THz, intégré sur le même substrat diélectrique ou semiconducteur que l'antenne; ledit guide d'onde planaire étant agencé pour transmettre ledit signal électromagnétique de la structure rayonnante formée par le ruban et le plan de masse au dispositif de détection.

Encore un autre objet de l'invention est un spectromètre Terahertz comportant : un émetteur de rayonnement Terahertz tel que décrit ci-dessus, du type à photoconduction ; un récepteur de rayonnement Terahertz tel que décrit ci-dessus, également du type à photoconduction, agencé pour recevoir un rayonnement Terahertz généré par ledit émetteur, après que ce dernier ait traversé une région pouvant contenir un échantillon à analyser ; une première source laser impulsionnelle ; une deuxième et une troisième source laser continues, dont l'une au moins est accordable, la différence de fréquence du rayonnement émis par lesdites deuxième et troisième source laser pouvant varier à l'intérieur une plage comprise entre 100 GHz et 3 THz ; et un montage optique pour diriger, de manière sélective, soit le rayonnement émis par ladite première source laser, soit une superposition des rayonnements émis par lesdites deuxième et troisième sources laser, sur des zones photoconductrices desdits émetteur et détecteur ; ledit montage optique comportant une ligne à retard pour introduire un décalage temporel variable entre des impulsions laser émises par ladite première source et dirigées vers une zone photoconductrice dudit émetteur, et des impulsions laser également émises par ladite première source et dirigées vers une zone photoconductrice dudit récepteur.

Encore un autre objet de l'invention est un procédé de fabrication d'une antenne telle que définie ci-dessus comportant les étapes suivantes :

- fabrication d'un plan de masse et d'un guide d'onde planaire présentant au moins deux bandes conductrices, dont une connectée audit plan de masse, par dépôt d'une première couche de métallisation (ME) sur une surface dite supérieure d'un substrat diélectrique ou semiconducteur ;
- dépôt d'une couche sacrificielle sur ledit plan de masse ;
- fabrication d'un ruban conducteur connecté à au moins une autre bande conductrice dudit guide d'onde par dépôt d'une deuxième couche de métallisation sur ladite couche sacrificielle ; et
- gravure de ladite couche sacrificielle pour libérer ledit ruban conducteur.

Selon des modes de réalisation particuliers :

- Le procédé peut comporter également, avant le dépôt de ladite couche de métallisation, une étape de réalisation d'ouvertures dans ladite couche sacrificielle pour permettre la connexion électrique et mécanique entre le ruban conducteur et ladite autre bande conductrice dudit guide d'onde planaire.

- Ladite deuxième couche de métallisation formant ledit ruban conducteur peut présenter une épaisseur comprise entre 0,1 $\mu$m et 50 $\mu$m, et de préférence entre 1 $\mu$m et 10 $\mu$m.
- Le procédé peut comporter également une étape de soulèvement dudit ruban conducteur.
- Le procédé peut comporter également une étape de fabrication d'une cale pour maintenir ledit ruban conducteur espacé dudit plan de masse. En particulier, cette étape peut comporter le dépôt d'une gouttelette de cire à l'état liquide entre le ruban conducteur et le plan de masse, et son durcissement successif.
- Le procédé peut comporter également une étape d'intégration sur ledit substrat diélectrique ou semiconducteur d'un dispositif de génération et/ou de détection d'un signal électromagnétique de fréquence comprise entre 100 GHz et 3 THz, ledit dispositif étant relié à la structure rayonnante formée par le ruban et le plan de masse par ledit guide d'onde planaire.

D'autres caractéristiques, détails et avantages de l'invention ressortiront à la lecture de la description faite en référence aux dessins annexés donnés à titre d'exemple et qui représentent, respectivement :

- Les figures 1, 2 et 3, respectivement une vue en élévation, du côté et en plan d'une antenne intégrée selon l'invention ;
- la figure 4, le schéma d'une expérience démontrant le fonctionnement d'une antenne et d'un dispositif émetteur/récepteur selon l'invention ;
- les figures 5 et 6, des graphiques illustrant les résultats de cette expérience ;
- les figures 7A à 7G, les étapes d'un procédé de fabrication de l'antenne des figures 1 à 3 ;
- la figure 8, une vue en coupe d'une antenne selon une variante de l'invention ; et
- la figure 9, un schéma de principe d'un spectromètre à Terahertz basé sur l'utilisation d'antennes selon l'invention.

Alors que les antennes intégrées opérantes dans le domaine Terahertz connues de l'art antérieur sont principalement de type planaire, l'invention porte sur une antenne tridimensionnelle réalisée sur un substrat isolant ou semiconducteur à l'aide de techniques photolithographiques standard. Plus précisément, l'antenne est de type cornet à onde transverse électromagnétique, c'est à dire constituée par un guide d'onde évasé formé par deux feuilles conductrices superposées séparées par un angle $\beta$.

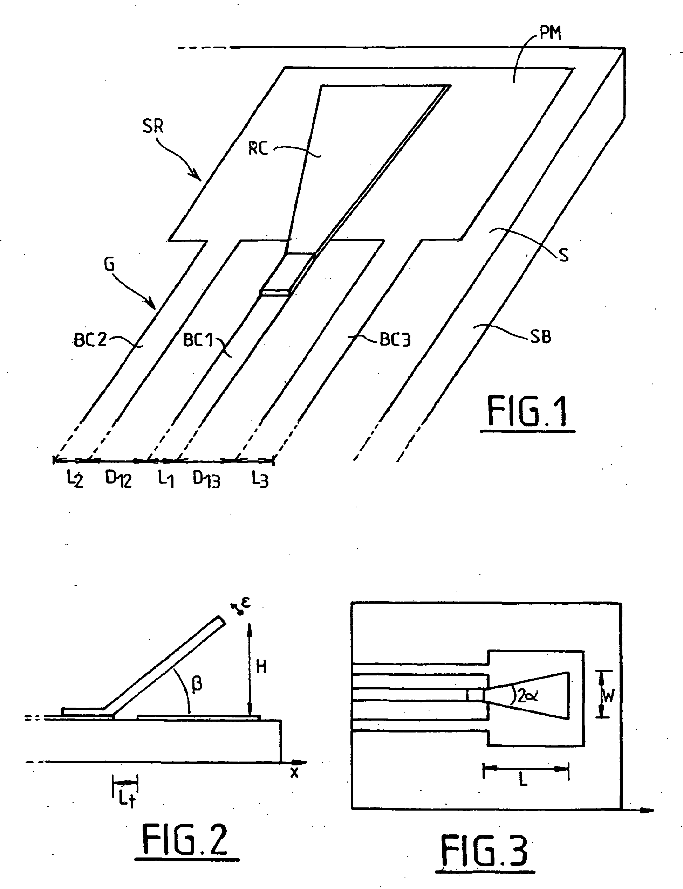

Dans le mode de réalisation représenté sur les figures 1 à 3, les deux feuilles conductrices constituant le cornet à onde transverse électromagnétique sont un plan de masse PM, déposé sur une surface S d'un substrat isolant ou semi-conducteur SB, et une ruban conducteur RC s'étendant au-dessus dudit plan de masse et formant un angle $\beta$ avec ce dernier. Le ruban RC est sensiblement plan et a une forme sensiblement triangulaire avec un angle au sommet 2$\alpha$. Le plan de masse PM et le ruban RC forment un guide d'onde dont l'impédance est constante le long de la direction longitudinale x et ne dépend que de $\alpha$ et $\beta$. Dans l'exemple considéré, $\alpha$=23,4° et $\beta$=9,8° pour une longueur totale du ruban L=3 mm, ce qui donne une impédance caractéristique proche de 50 $\Omega$, une hauteur totale H=520 $\mu$m et une largeur d'extrémité du ruban W=2,6 mm.

L'impédance caractéristique peut être calculée par la formule approchée suivante, valable pour W>H et pour un diélectrique de permittivité égale à 1 :

$$Z_C \approx \frac{120\pi}{\dfrac{W}{H}+2} = \frac{60\pi}{\dfrac{\tan\alpha}{\sin\beta}+1}$$

Cette dernière formule donne des résultats corrects pour des angles $\alpha$ et $\beta$ inférieurs à 50°. Des méthodes de calcul plus générales et des abaques peuvent être trouvées dans : R.T. Lee et al., IEEE Transaction on antennas and propagation, vol. 52, p. 315 (2004).

En principe, les angle $\alpha$ et $\beta$ peuvent prendre toute valeur comprise entre 0° et 90°, à l'exclusion des valeurs extrêmes. Cependant, l'angle $\alpha$ est de préférence compris entre 5° et 70°, et l'angle $\beta$ entre 5° et 45°.

La longueur du ruban RC est un paramètre important car elle détermine la fréquence de coupure inférieure de l'antenne. Cette longueur est généralement comprise entre 100 $\mu$m et 10 mm, et de préférence entre 500 $\mu$m et 5 mm.

La fréquence de coupure supérieure dépend de l'échelle géométrique la plus petite pour laquelle l'antenne reste homothétique. Si le ruban RC était parfaitement triangulaire, raccordé au guide d'onde planaire G par sa pointe, la largeur de bande serait donc théoriquement infinie (en pratique, limitée seulement par les propriétés physiques intrinsèques des matériaux utilisés). Dans une structure réalisable en pratique, la fréquence de coupure supérieure est essentiellement déterminée par la largeur finie du raccordement entre le ruban RC et le guide d'onde G.

La forme du ruban conducteur RC peut ne pas être triangulaire, par exemple sa largeur W peut dépendre de manière non-linéaire de la coordonnée longitudinale x. En outre, le ruban RC peut ne pas être plan, mais présenter une courbure ou gondolement : comme cela sera discuté plus loin, en fait, une légère courbure est difficilement évitable en raison des contraintes mécaniques internes accumulées lors de la fabrication du dispositif. Cependant, si on souhaite obtenir une antenne à large bande, la structure rayonnante SR doit être homothétique, c'est à dire présenter la même géométrie quelle que soit l'échelle à laquelle elle est représentée ; autrement dit, le rapport largeur - hauteur W(x)/H(x) doit rester constant autant que possible. Afin de maintenir ce rapport W(x)/H(x) sensiblement constant et d'obtenir ainsi un fonctionnement à large bande même en présence d'un gondolement induit par les contraintes internes, il est possible de choisir un ruban RC de forme généralement triangulaire mais avec des côtés curvilignes pour maintenir ce rapport W(x)/H(x) sensiblement constant.

Le ruban RC est réalisé en métal hautement conducteur (or, cuivre, ...) avec une épaisseur ε de l'ordre d'au moins quelques micromètres, par exemple 5 μm, pour des raisons de résistance mécanique. La solidité de la structure peut être améliorée par des bras ou cales diélectriques ou même métalliques, maintenant le ruban RC espacé du plan de masse PM. Une technique particulièrement efficace consiste à stabiliser le ruban à l'aide d'une gouttelette de cire de paraffine fondue : un tel matériau est adapté aux applications Terahertz en raison des faibles pertes qu'il introduit et de son indice de réfraction relativement bas, de l'ordre de 1,5.

La structure rayonnante formée par le ruban RC et le plan de masse PM est reliée à un guide d'onde planaire G formé par trois bandes conductrices : une première bande BC1 est connectée au ruban RC et transporte le signal destiné à être émis ou le signal reçu, tandis qu'une deuxième et une troisième bande, BC2 et BC3, disposées symétriquement de part et d'autre de la première bande, sont reliées au plan de masse PM. En fait, on peut considérer que le ruban RC est une prolongation de la première bande BC1, et que le plan de masse PM est formé par l'élargissement et l'union de la deuxième et de la troisième bande. On comprend qu'il est avantageux que l'impédance caractéristique du guide G soit sensiblement égale à celle de la structure rayonnante SR, afin d'éviter des pertes par réflexion au niveau de la transition entre les deux structures.

Dans l'exemple considéré, les trois bandes ont la même largeur $L_1=L_2=L_3=10$ μm, avec un espacement $D_{12}=D_{13}$ de 6 μm entre chacune des bandes latérales BC2, BC3 et la bande centrale BC1. La largeur totale du guide G doit être la plus petite possible afin de minimiser les pertes par rayonnement.

La longueur $L_t$ qui sépare le point de séparation du ruban RC de la surface S et le côté arrière du plan de masse PM est un autre paramètre qui doit être optimisé afin de minimiser les pertes par réflexion au niveau de la transition entre le guide G et la structure rayonnante SR. En principe, cette longueur devrait être la plus petite possible, compatiblement avec les contraintes de fabrication et la nécessité d'éviter tout contact électrique direct entre le ruban RC et le plan de masse PM. Dans l'exemple considéré, $L_t$ a été choisi, d'une manière très prudente, égal à 20 μm. Des meilleurs résultats peuvent être obtenus en utilisant une longueur de séparation de quelques micromètres, par exemple $L_t=5$ μm.

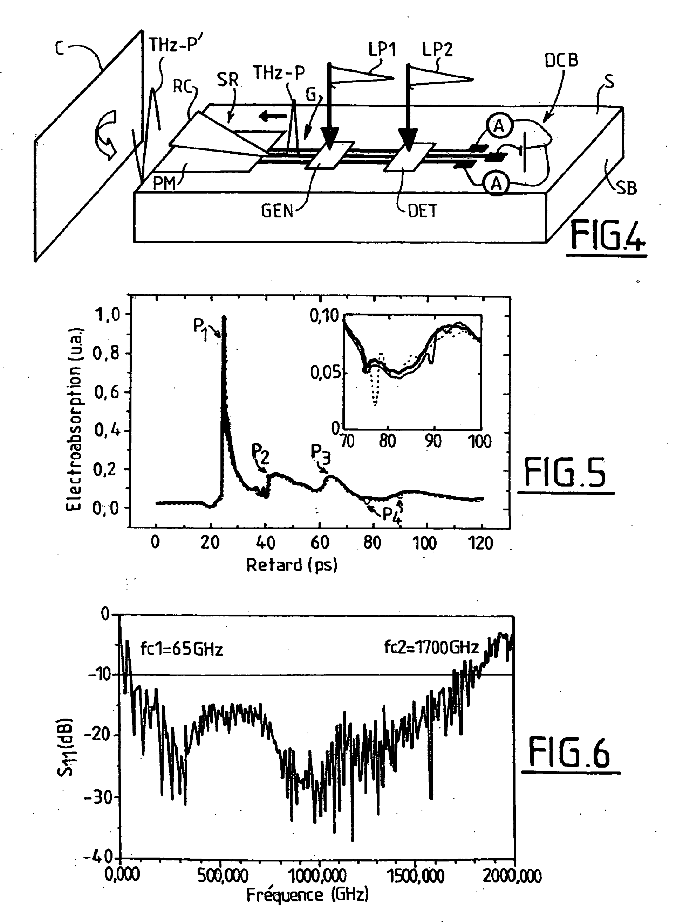

Le substrat SB est réalisé dans un matériau diélectrique ou semiconducteur, de préférence présentant des pertes relativement faibles dans le domaine spectral d'intérêt et un indice de réfraction le plus bas possible pour minimiser l'effet de piégeage du rayonnement. Des exemples de substrats adaptés sont AsGa semi-isolant (utilisé dans l'exemple des figures 4 à 6), Si, IP, SiC, quartz, diamant, verre, etc. En pratique, le choix du substrat est lié d'une part à des considérations technologique et d'autre part à la nécessité d'intégrer, sur ce même substrat, au moins un élément actif de génération et/ou de détection de rayonnement Terahertz. Cet élément actif peut être un photodétecteur, une photodiode, une diode PIN, à effet tunnel résonnant, à contact Schottky, etc., auquel cas le substrat SB doit être de type semiconducteur ; il peut également s'agir simplement d'une couche mince de semiconducteur polarisé par des électrodes métalliques, notamment dans le cas d'un générateur photoconducteur ou d'un détecteur à effet Franz-Keldysh, auquel cas il est possible d'utiliser un substrat sensiblement isolant, par exemple en quartz ou en verre.

Un aspect remarquable de l'invention est que le rayonnement se fait directement dans l'air, et pas dans le substrat : pour cette raison, l'utilisation d'une lentille de couplage n'est pas nécessaire. Par ailleurs, l'importance des propriétés du substrat (constante diélectrique, pertes...) est moindre que dans le cas des dispositifs de l'art antérieur, ce qui laisse plus de marge de manoeuvre au concepteur pour choisir le matériau le plus adapté du point de vue technologique et/ou pour la réalisation des éléments actifs.

A première vue, l'antenne de l'invention présente une ressemblance avec celle décrite dans l'article de J.-C. Langer et al. « Micromachined Reconfigurable Out-of-Plane Microstrip Patch Antenna Using Plastic Deformation Magnetic Actuation », IEEE Microwave and Wireless Components Letters, Vol. 13, No. 3, page 120 (2003). Cette antenne présente une structure rayonnante formée par une plaque conductrice de forme sensiblement rectangulaire qui s'étend au-dessus de la surface supérieure d'un substrat diélectrique en formant un angle avec cette dernière, et un plan de masse conducteur déposé sur la surface inférieure de ce même substrat. La plaque sur la surface supérieure et le plan de masse sur la surface inférieure sont en fait des prolongements d'une ligne de transmission à microbandes qui amène les signaux à l'antenne. Cette antenne n'est pas, à proprement parler, de type à cornet, mais constitue plutôt une variante d'une antenne à microbandes. Elle présente de ce fait une bande relativement étroite, de l'ordre de 5%, centrée à 25 - 28 GHz, c'est à dire à des fréquences éloignées du domaine Terahertz. Par ailleurs, comme dans toute antenne à microbandes, le substrat participe au rayonnement, ce qui n'est pas gênant dans le domaine spectral considéré (ondes centimétriques), mais conduirait à des pertes très élevées et à un effet prononcé de guidage des ondes émises si on essayait de s'en servir aux fréquences Terahertz.

La figure 4 montre un schéma d'un système émetteur/récepteur monolithique selon l'invention, du type à photoconduction. Un tel système est constitué par une antenne du type décrit ci-dessus, un dispositif actif de génération de rayonnement Terahertz GEN et un dispositif actif de détection de rayonnement Terahertz DET, reliés à la structure rayonnante SR par l'intermédiaire du guide d'onde planaire G. Dans une expérience démonstrative, le système de la figure 4 est utilisé comme radar monostatique pour mesurer la distance entre l'antenne et une cible réfléchissante C située à quelques millimètres de cette dernière.

Le dispositif de génération GEN est simplement constitué par une couche de GaAs épitaxié à basse température, déposée sur les bandes conductrices BC1, BC2 et BC3 du guide G et polarisée par une tension continue de 60 V appliquée entre BC1 et BC2/BC3 par un générateur électrique DCB. En conditions d'équilibre, le film en GaAs est sensiblement isolant; une impulsion laser LP1 d'une durée de 120 fs à 810 nm, générée par un laser Ti:Saphir le rend conducteur pour un temps de l'ordre de 1ps, durée de vie des porteurs de charge ; cette brusque variation de conductibilité engendre une impulsion unipolaire de courant électrique THz-P également , d'une durée de l'ordre de 1 ps, présentant donc un spectre s'étendant jusqu'aux fréquences Terahertz. Cette impulsion THz-P se propage le long du guide G et est rayonnée dans l'espace libre par le cornet SR. On observe que, bien que l'impulsion guidée THz-P soit unipolaire, l'impulsion rayonnée THz-P' ne l'est pas, ce qui est une conséquence bien connue des lois de l'électromagnétisme.

Le générateur GEN est connecté au plan de masse PM par l'intermédiaire de deux condensateurs à base de $Si_3N_4$ (non représentés) qui interrompent les bandes P2, P3. En effet, si on appliquait la tension de polarisation directement entre le ruban RC et le plan de masse PM, une force électrostatique s'exercerait entre ces deux éléments, pouvant induire leur rapprochement.

L'impulsion THz-P' se propage dans l'espace libre jusqu'à la cible C, constituée par un plan conducteur, qui la réfléchit vers l'antenne. La détection de l'impulsion réfléchie se fait optiquement à l'aide d'un détecteur DET constitué par une couche en $Al_{0,08}Ga_{0,92}As$ déposée sur les bandes conductrices BC1, BC2 et BC3 du guide G. Une impulsion laser LP2, réplique décalée temporellement de l'impulsion de génération LP1, est dirigée vers cette couche et partiellement réfléchie ; en raison de l'effet Franz-Keldysh, le coefficient de réflexion dépend du champ électrique instantané dans le détecteur, qui est donné par la superposition de la tension continue de polarisation et du signal Terahertz. En variant le retard entre les impulsions laser de génération LP1 et de détection LP2, l'impulsion THz-P' réfléchie et captée par l'antenne est donc échantillonnée avec une résolution temporelle sub-picoseconde, selon le principe pompe-sonde.

Les techniques de génération et de détection d'impulsions Terahertz utilisées dans cette expérience sont décrites plus en détail dans les articles suivants :

J.-F. Lampin et al, « Détection of picosecond electrical pulses using the intrinsic Franz-Keldysh effect », Appl. Phys. Lett. 78, 4103 (2001) ; et L. Desplanque et al. « Génération and détection of terahertz pulses using post-processing bonding of low-temperature-grown GaAs and AlGaAs », Appl. Phys. Lett. 82, 2049 (2004).

En variante, il est possible de générer un rayonnement Terahertz continu. Pour ce faire on utilise, en remplacement de l'impulsion laser LP1, deux faisceaux laser continus, présentant une différence de fréquence égale à la fréquence du rayonnement à générer. Cette technique, qui exploite le battement entre les deux faisceaux laser, est dite « génération par photomélange » et est décrit dans l'article de E. R. Brown, K. A. Mclntosh, K. B. Nichols, et C. L. Dennis « Photomixing up to 3.8 THz in low-temperature-grown GaAs » Applied Physics Letters vol. 66, p. 285 (1995).

Le photomélange peut également être exploité pour la détection du rayonnement Terahertz selon une technique appelée détection homodyne: voir l'article de G. Mouret, S. Matton, R. Bocquet, D. Bigourd, F. Hindle, A. Cuisset, J. -F. Lampin et D. Lippens « Anomalous dispersion measurement in terahertz frequency region by photomixing Applied Physics » Letters vol. 88, 181105 (2006).

En variante, le rayonnement Terahertz continu peut être détecté à l'aide d'un bolomètre.

La figure 5 montre le signal d'électroabsorption (en unités arbitraires a.u.) de l'impulsion de sonde LP2 en fonction du retard pompe-sonde (en picosecondes ps). Le premier pic $P_1$ correspond à l'impulsion électrique Terahertz THz-P conduite directement par le guide G du générateur GEN au détecteur DET ; les pics $P_2$ et $P_3$ correspondent aux réflexions parasites par la transition G-SR et par l'extrémité du cornet, respectivement, tandis que le pic $P_4$ correspond effectivement à l'impulsion THz-P' émise, réfléchie et détectée. L'encadré montre un détail du pic $P_4$ pour deux positions de la cible C, 5,5 mm (ligne pointillée) et 7,5 mm (ligne continue grise) de l'extrémité du cornet, et en l'absence de ce dernier (ligne continue noire). Le temps de montée sub-picoseconde du pic $P_4$ (de 10% à 90% en 700 fs environ) montre la faible dispersion de l'antenne selon l'invention. Ce caractère peu dispersif est caractéristique des antennes à cornet à onde transverse électromagnétique.

En divisant la transformée de Fourier de l'impulsion réfléchie par celle de l'impulsion incidente on obtient le coefficient de réflexion de l'antenne en fonction de la fréquence, $|S_{11}(f)|$. Comme le montre la figure 6, ce coefficient de réflexion est inférieur à -10 dB sur une bande s'étendant de 65 GHz à 1700 GHz (1,7 THz) environ, témoignant du fonctionnement ultra-large bande de l'antenne selon l'invention.

Les pertes attribuables à la propagation le long du guide G sont estimées à 4dB pour des fréquences jusqu'à 800 GHz et peuvent être réduites ultérieurement en choisissant un substrat avec une permittivité diélectrique plus faible, tel que le quartz.

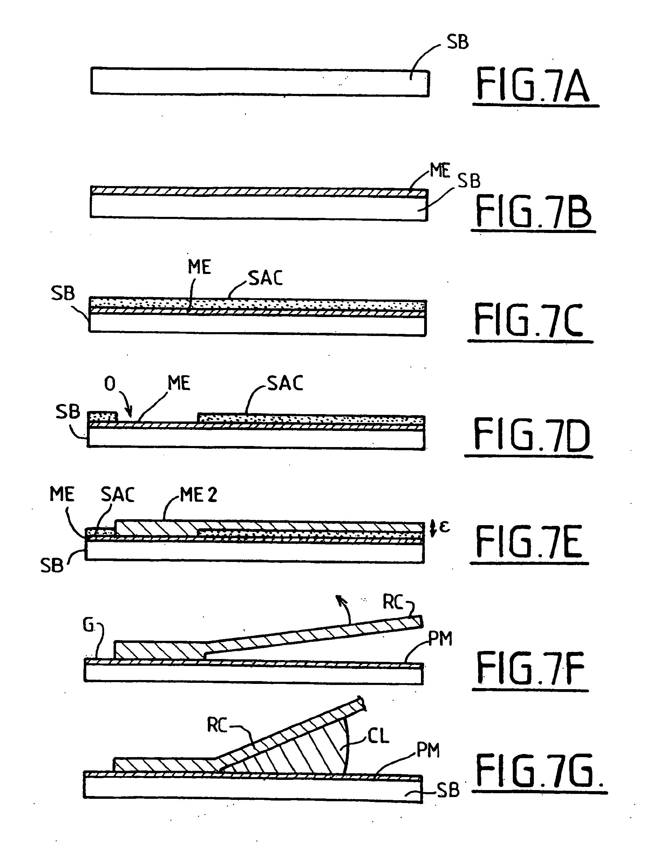

Les figures 7A à 7G montrent les différentes étapes d'un procédé de fabrication d'une antenne intégrée selon l'invention. Premièrement, figures 7A-7B, une première couche métallique ME est déposée sur le substrat SB et gravée par les techniques classiques de la microélectronique afin de réaliser les bandes conductrices BC1-BC3 du guide G et le plan de masse PM. Ensuite, figure 7C, la couche métallique ME est recouverte par une couche sacrificielle en résine photosensible, dans laquelle sont pratiquées des ouvertures O en correspondance des futures connexions électriques et mécaniques entre le ruban conducteur RC et la bande conductrice centrale BC1. Une deuxième couche métallique ME2, sensiblement plus épaisse que la première couche ME, est déposée sur la couche sacrificielle SAC (figure 7E) pour former le ruban conducteur RC. L'épaisseur $\varepsilon$ de la couche ME2 est déterminée de manière empirique. En effet, cette épaisseur doit être suffisante à la fois pour assurer la solidité mécanique du ruban RC une fois que ce dernier n'est plus supporté par le substrat et pour éviter que les contraintes internes à la couche ME2 ne déterminent une courbure trop importante de cette dernière, courbure qui est inversement proportionnelle à l'épaisseur $\varepsilon$. En même temps, un certain niveau de courbure s'avère indispensable pour assurer la libération de l'antenne : une couche ME2 trop épaisse adhérerait au plan de masse ME et empêcherait de ce fait le soulèvement du ruban RC.

Enfin, comme représenté sur la figure 7F, le ruban RC est libéré par sous-gravure de ladite couche sacrificielle SAC. Les contraintes internes précitées provoquent un soulèvement du ruban RC dès sa libération. En général, cependant, ce soulèvement est insuffisant pour atteindre l'angle $\beta$ souhaité ; il est donc nécessaire d'agir sur le ruban RC, par exemple à l'aide d'un micromanipulateur. De manière optionnelle, on peut prévoir une étape additionnelle de stabilisation de la structure rayonnante SR, notamment en disposant une gouttelette de paraffine liquide entre le plan de masse PM et le ruban conducteur RC ; en solidifiant, cette dernière forme une cale diélectrique CL qui rigidifie l'antenne (figure 7G).

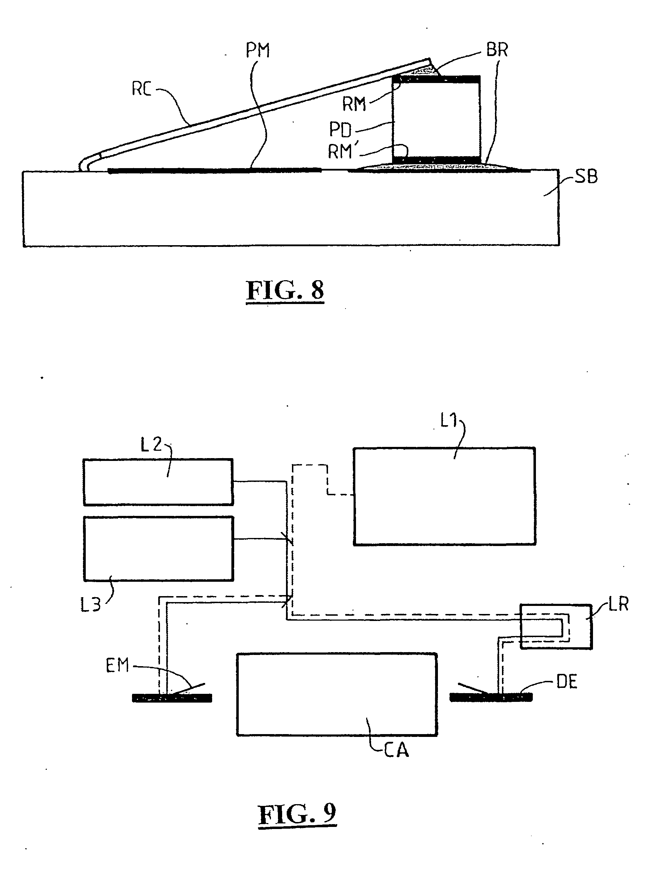

En variante, comme le montre la figure 8, la structure de l'antenne peut être maintenue par un plot diélectrique PD, tel qu'un cube en PTFE disposé entre le plan de masse PM et le ruban conducteur RC et fixé par collage ou par brasure ; dans ce dernier cas, un revêtement métallique RM, RM' par exemple en cuivre, doit être prévu sur les surfaces supérieure et/ou inférieure du plot. Même en cas de collage, un tel revêtement peut être utile pour séparer le rayonnement Terahertz de la colle, qui serait autrement susceptible d'introduire des pertes importantes. L'utilisation d'une brasure BR s'avère particulièrement avantageuse : en effet, lorsque le métal fondu solidifie, il introduit une tension mécanique du ruban conducteur RC, qui le rend plus rectiligne en améliorant ainsi les propriétés électromagnétiques de l'antenne. Même lorsqu'une cale de ce type est utilisée, il peut être utile de remplir de cire l'espace compris entre le plan de masse et le ruban conducteur, afin d'homogénéiser la permittivité électrique dans cet espace.

Le ou les dispositifs actifs de génération et/ou détection de rayonnement Terahertz peuvent être fabriqués en même temps que l'antenne, éventuellement avec la mise en commun de certaines étapes du procédé de fabrication (notamment, des étapes de métallisation). En variante, la fabrication de ces dispositifs peut avoir lieu avant ou après celle de l'antenne.

Une des applications les plus prometteuses du rayonnement Terahertz est l'analyse spectrométrique, en particulier de gaz, par exemple pour identifier des polluants. En particulier, deux techniques de spectrométrie peuvent être utilisées.

Une première possibilité consiste à utiliser des impulsions Terahertz brèves, et donc à large bande, pour effectuer des mesures spectroscopiques par transformée de Fourier. Cette technique est rapide, mais présente une basse résolution spectrale (typiquement de l'ordre de quelques GHz). Typiquement, pour ce type d'application on utilise des antennes à dipôle.

Une autre possibilité consiste à utiliser un rayonnement Terahertz continu accordable obtenu en utilisant la technique du photomélange, décrite plus haut. La faible puissance du rayonnement Terahertz ainsi obtenu impose l'utilisation d'antennes spirales ou similaires. Cette technique permet d'effectuer des mesures spectroscopiques à haute résolution (quelques MHz, voire moins), mais le balayage de larges plages de fréquence nécessite de temps importants.

L'antenne de l'invention présente des caractéristiques électromagnétiques qui conviennent à l'émission et à la réception d'impulsions Terahertz, mais aussi de rayonnement continu accordable. Cela rend possible la réalisation d'un spectromètre combinant les avantages des deux techniques décrites ci-dessus.

Un tel spectromètre, dont la structure est représentée schématiquement sur la figure 9, comprend :

- un émetteur Terahertz EM, par exemple du type de la figure 4 ;
- un détecteur Terahertz DE qui peut être, lui aussi, du type de la figure 4 ;
- une cellule d'analyse CA destinée à contenir un échantillon (typiquement un gaz) à analyser, ladite cellule étant disposée entre l'émetteur et le détecteur ;
- une source laser impulsionnelle L1 ;
- deux sources laser continues, L2 et L3, dont une au moins est accordable ;
- un montage optique pour diriger de manière sélective un rayonnement laser généré par ladite source laser impulsionnelle, ou par lesdites sources lasers continues, sur un élément photoconducteur desdits émetteur et détecteur Terahertz. Le montage optique du détecteur comporte une ligne à retard LR.

Pour analyser spectralement l'échantillon contenu dans la cellule CA, on commence par effectuer une série de mesures en régime impulsionnel. Les impulsions laser engendrées par la source L1 servent aussi bien pour la génération que pour la détection du rayonnement Terahertz, comme expliqué plus haut, en référence à la figure 4. La ligne à retard LR introduit un décalage variable entre l'impulsion de génération et l'impulsion de détection : en effectuant un balayage de ce décalage, on peut reconstituer la forme temporelle de l'impulsion Terahertz reçue par le détecteur DE. Un spectre à large bande et basse résolution peut donc être calculé par transformée de Fourier.

Cette première phase permet d'identifier les plages de fréquences où se situent des lignes d'absorption permettant de caractériser l'échantillon. Des mesures spectroscopiques en continu sont donc effectuée dans ces régions uniquement, en utilisant les sources laser L2 et L3, pour obtenir des spectres à haute résolution dans ces plages uniquement. Lors de cette deuxième phase, le décalage temporel introduit par la ligne à retard LR peut être maintenu fixe.

Autrement dit, une première phase de spectroscopie impulsionnelle à basse résolution permet d'identifier les plages de fréquence « intéressantes », puis des acquisitions à haute résolution sont effectuées dans ces plages.

On comprend que la figure 9 ne représente qu'un seul mode de réalisation possible d'un spectromètre selon l'invention. En variante, on peut envisager d'utiliser un même dispositif comme émetteur et détecteur, le rayonnement Terahertz étant réfléchi par un écran disposé derrière la cellule CA. Par ailleurs, la détection du rayonnement lors des mesures en continu peut se faire en utilisant un bolomètre.

### Revendications

1. Antenne intégrée pour l'émission ou la réception de rayonnement dans une plage de fréquences comprise entre 100 GHz et 3 THz, **caractérisée en ce qu'**elle comporte :

   - un plan de masse conducteur (PM), déposé sur une surface (S) dite supérieure d'un substrat (SB) diélectrique ou semi-conducteur ;
   - un ruban conducteur (RC) s'étendant au-dessus dudit plan de masse (PM) et formant un angle ($\beta$) avec ce dernier, de manière à former une structure rayonnante (SR) de type cornet à onde transverse électromagnétique , et
   - un guide d'onde planaire (G) comportant au moins une première (BC1) et une deuxième (BC2) bande conductrice formées sur ladite surface supérieure du substrat, reliées respectivement audit ruban conducteur (RC) et audit plan de masse conducteur (PM).

2. Antenne selon la revendication 1, dans laquelle la largeur (W) dudit ruban conducteur (RC) et sa distance (H) dudit plan de masse (PM) sont variables dans une direction longitudinale (x), le rapport entre ladite largeur et ladite distance étant choisi de manière à réaliser une adaptation d'impédance entre ledit guide d'onde planaire (G) et la structure rayonnante (SR) formée par le ruban et le plan de masse.

3. Antenne selon la revendication 2 dans laquelle le rapport entre la largeur (W) du ruban conducteur et sa distance (H) du plan de masse se maintient constant sur au moins une partie de la longueur dudit ruban conducteur.

4. Antenne selon la revendication 3, dans laquelle la largeur (W) dudit ruban conducteur et sa distance (H) dudit plan de masse augmentent linéairement suivant ladite direction longitudinale (x).

5. Antenne selon l'une des revendications précédentes, dans laquelle ledit guide d'onde planaire (G) comporte également une troisième bande conductrice (BC3), également reliée audit plan de masse (PM), la deuxième (BC2) et la troisième (BC3) bandes conductrices étant disposées symétriquement de part et d'autre de ladite première (BC1) bande conductrice.

6. Antenne selon l'une des revendications précédentes, comportant également au moins une cale (CL) pour maintenir ledit ruban conducteur espacé dudit plan de masse.

7. Emetteur Terahertz comportant :

   - une antenne selon l'une des revendications précédentes ; et
   - au moins un dispositif (GEN) de génération d'un signal électromagnétique de fréquence comprise entre 100 GHz et 3 THz, intégré sur le même substrat (SB) diélectrique ou semiconducteur que l'antenne;
   - le guide d'onde planaire (G) de l'antenne étant agencé pour transmettre ledit signal électromagnétique du dispositif de génération (GEN) à la structure rayonnante (SR) formée par le ruban (RC) et le plan de masse (PM).

8. Récepteur Terahertz comportant :

   - une antenne selon l'une des revendications 1 à 6; et

- au moins un dispositif de détection (DET) d'un signal électromagnétique de fréquence comprise entre 100 GHz et 3 THz; intégré sur le même substrat (SB) diélectrique ou semiconducteur que l'antenne;

- le guide d'onde planaire (B) de l'antenne étant agencé pour transmettre ledit signal électromagnétique de la structure rayonnante (SR) formée par le ruban (RC) et le plan de masse (PM) au dispositif de détection (DET).

9. Spectromètre Terahertz comportant :

- un émetteur (EM) de rayonnement Terahertz selon la revendication 7, du type à photoconduction ;

- un récepteur (DE) de rayonnement Terahertz selon la revendication 8, également du type à photoconduction, agencé pour recevoir un rayonnement Terahertz généré par ledit émetteur, après que ce dernier ait traversé une région (CA) pouvant contenir un échantillon à analyser ;

- une première source laser impulsionnelle (L1) ;

- une deuxième (L2) et une troisième (L3) source laser continues, dont l'une au moins est accordable, la différence de fréquence du rayonnement émis par lesdites deuxième et troisième source laser pouvant varier à l'intérieur une plage comprise entre 100 GHz et 3 THz ; et

- un montage optique pour diriger, de manière sélective, soit le rayonnement émis par ladite première source laser (L1), soit une superposition des rayonnements émis par lesdites deuxième (L2) et troisième (L3) sources laser, sur des zones photoconductrices (GEN, DET) desdits émetteur et détecteur ;

- ledit montage optique comportant une ligne à retard (LR) pour introduire un décalage temporel variable entre des impulsions laser émises par ladite première source (L1) et dirigées vers une zone photoconductrice (GEN) dudit émetteur (EM), et des impulsions laser également émises par ladite première source (L1) et dirigées vers une zone photoconductrice (DET) dudit récepteur (DE).

10. Procédé de fabrication d'une antenne selon l'une des revendications 1 à 6 comportant les étapes suivantes :

- fabrication d'un plan de masse (PM) et d'un guide d'onde planaire (G) présentant au moins deux bandes conductrices, dont une connectée audit plan de masse, par dépôt d'une première couche de métallisation (ME) sur une surface (S) dite supérieure d'un substrat (SB) diélectrique ou semiconducteur ;

- dépôt d'une couche sacrificielle (SAC) sur ledit plan de masse (PM) ;

- fabrication d'un ruban conducteur (RC) connecté à au moins une autre bande conductrice dudit guide d'onde par dépôt d'une deuxième couche de métallisation (ME2) sur ladite couche sacrificielle (SAC) ; et

- gravure de ladite couche sacrificielle (SAC) pour libérer ledit ruban conducteur (RC).

11. Procédé selon la revendication 10 comportant également, avant le dépôt de ladite couche de métallisation (ME), une étape de réalisation d'ouvertures (O) dans ladite couche sacrificielle (SAC) pour permettre la connexion électrique et mécanique entre le ruban conducteur (RC) et ladite autre bande conductrice dudit guide d'onde planaire (G).

12. Procédé selon l'une des revendications 10 ou 11 comportant également une étape de soulèvement dudit ruban conducteur (RC).

13. Procédé selon l'une des revendications 10 à 12 comportant également une étape de fabrication d'une cale (CL) pour maintenir ledit ruban conducteur (RC) espacé dudit plan de masse (PM).

14. Procédé selon la revendication 13 dans lequel ladite étape de fabrication d'une cale (CL) comporte le dépôt d'une gouttelette de cire à l'état liquide entre le ruban conducteur (RC) et le plan de masse (PM), et son durcissement successif.

15. Procédé selon l'une des revendication 10 à 14 comportant également une étape d'intégration sur ledit substrat (SB) diélectrique ou semiconducteur d'un dispositif de génération (GEN) et/ou de détection (DET) d'un signal électromagnétique de fréquence comprise entre 100 GHz et 3 THz, ledit dispositif étant relié à la structure rayonnante (SR) formée par le ruban (RC) et le plan de masse (PM) par ledit guide d'onde planaire (G).

**Patentansprüche**

1. Integrierte Antenne zur Emission oder zum Empfang einer Strahlung in einem Frequenzbereich zwischen 100 GHz und 3 THz, **dadurch gekennzeichnet, dass** sie aufweist:

- eine leitende Grundplatte (PM), die auf eine so genannte Oberfläche (S) eines dielektrischen oder Halbleiter-Substrats (SB) aufgelegt ist;

- ein Leiterband (RC), das sich oberhalb der Grundplatte (PM) erstreckt und einen Winkel ($\beta$) mit dieser bildet, um eine Strahlungsstruktur (SR) von der Art Hornstrahler mit elektromagnetischer transversaler Welle zu bilden; und

- einen planaren Wellenleiter (G), der mindestens einen ersten (BC1) und einen zweiten (BC2) Leiterstreifen aufweist, die auf der Oberfläche des Substrats gebildet sind, jeweils mit dem Leiterband (RC) bzw. mit der leitenden Grundplatte (PM) verbunden.

2. Antenne nach Anspruch 1, wobei die Breite (W) des Leiterbands (RC) und sein Abstand (H) zur Grundplatte (PM) in einer Längsrichtung (x) variabel sind, wobei das Verhältnis zwischen der Breite und dem Abstand so gewählt wird, dass eine Impedanzanpassung zwischen dem planaren Wellenleiter (G) und der vom Band und von der Grundplatte gebildeten Strahlungsstruktur (SR) durchgeführt wird.

3. Antenne nach Anspruch 2, wobei das Verhältnis zwischen der Breite (W) des Leiterbands und seinem Abstand (H) zur Grundplatte über mindestens einen Teil der Länge des Leiterbands konstant gehalten wird.

4. Antenne nach Anspruch 3, wobei die Breite (W) des Leiterbands und sein Abstand (H) zur Grundplatte linear in Längsrichtung (x) zunehmen.

5. Antenne nach einem der vorhergehenden Ansprüche, wobei der planare Wellenleiter (G) ebenfalls einen dritten Leiterstreifen (BC3) aufweist, der ebenfalls mit der Grundplatte (PM) verbunden ist, wobei der zweite (BC2) und der dritte (BC3} Leiterstreifen symmetrisch zu beiden Seiten des ersten (BC1) Leiterstreifens angeordnet sind.

6. Antenne nach einem der vorhergehenden Ansprüche, die ebenfalls mindestens einen Keil (CL) aufweist, um das Leiterband von der Grundplatte entfernt zu halten.

7. Terahertz-Emitter, der aufweist:

- eine Antenne nach einem der vorhergehenden Ansprüche; und
- mindestens eine Vorrichtung (GEN) zur Erzeugung eines elektromagnetischen Signals einer Frequenz zwischen 100 GHz und 3 THz, eingebaut auf das gleiche dielektrische oder Halbleiter-Substrat (SB) wie die Antenne;
- wobei der planare Wellenleiter (G) der Antenne eingerichtet ist, um das elektromagnetische Signal von der Erzeugungsvorrichtung (GEN) zur vom Band (RC) und von der Grundplatte (PM) gebildeten Strahlungsstruktur (SR) zu übertragen.

8. Terahertz-Empfänger, der aufweist:

- eine Antenne nach einem der Ansprüche 1 bis 6; und
- mindestens eine Erfassungsvorrichtung (DET) eines elektromagnetischen Signals einer Frequenz zwischen 100 GHz und 3 THz; eingebaut auf das gleiche dielektrische oder Halbleiter-Substrat wie die Antenne;
- wobei der planare Wellenleiter (B) der Antenne eingerichtet ist, um das elektromagnetische Signal von der vom Band (RC) und von der Grundplatte (PM) gebildeten Strahlungsstruktur (SR) zur Erfassungsvorrichtung (DET) zu übertragen.

9. Terahertz-Spektrometer, das aufweist:

- einen Terahertz-Strahlungsemitter (EM) nach Anspruch 7, von der Art mit Photoleitung;
- einen Terahertz-Strahlungsempfänger (DE) nach Anspruch 8, ebenfalls von der Art mit Photoleitung, der eingerichtet ist, um eine vom Emitter erzeugte Terahertz-Strahlung zu empfangen, nachdem diese einen Bereich (CA) durchquert hat, der eine zu analysierende Probe enthalten kann;
- eine erste Impulslaserquelle (L1);
- eine zweite (L2) und einer dritte {L3) kontinuierliche Laserquelle, von denen mindestens eine abstimmbar ist, wobei die Frequenzdifferenz der von der zweiten und dritten Laserquelle emittierten Strahlung innerhalb eines Bereichs zwischen 100 GHz und 3 THz variieren kann; und
- einen optischen Aufbau, um selektiv entweder die von der ersten Laserquelle (L1) emittierte Strahlung oder eine Übereinanderanordnung der von der zweiten (L2) und dritten (L3) Laserquelle emittierten Strahlungen auf photoleitende Zonen (GEN, DE1) des Emitters und Detektors zu richten;
- wobei der optische Aufbau eine Verzögerungsleitung (LR) aufweist, um eine variable Zeitverzögerung zwischen von der ersten Quelle (L1) emittierten und zu einer photoleitenden Zone (GEN) des Emitters (EM) gerichteten Laserimpulsen und Laserimpulsen, die ebenfalls von der ersten Quelle (L1) emittiert werden und zu einer photoleitenden Zone (DET) des Empfängers (DE) gerichtet sind, einzuführen.

10. Verfahren zur Herstellung einer Antenne nach einem der Ansprüche 1 bis 6, das die folgenden Schritte aufweist:

- Herstellung einer Grundplatte (PM) und eines planaren Wellenleiters (G), der mindestens zwei Leiterstreifen aufweist, von denen einer mit der Grundplatte verbunden ist, durch Aufbringen einer ersten Metallisierungsschicht (ME) auf eine so genannte Oberfläche (S) eines dielektrischen oder Halbleiter-Substrats (SB);

- Aufbringen einer Opferschicht (SAC) auf die Grundplatte (PM);

- Herstellung eines Leiterbands (RC), das mit mindestens einem anderen Leiterstreifen des Wellenleiters verbunden ist, durch Aufbringen einer zweiten Metallisierungsschicht (ME2) auf die Opferschicht {SAC); und

- Ätzen der Opferschicht (SAC), um das Leiterband (RC) freizulegen.

**11.** Verfahren nach Anspruch 10, das ebenfalls vor dem Aufbringen der Metallisierungsschicht (ME) einen Schritt der Herstellung von Öffnungen (O) in der Opferschicht (SAC) aufweist, um die elektrische und mechanische Verbindung zwischen dem Leiterband (RC) und dem anderen Leiterstreifen des planaren Wellenleiters (G) zu ermöglichen.

**12.** Verfahren nach einem der Ansprüche 10 oder 11, das ebenfalls einen Schritt des Anhebens des Leiterbands (RC) aufweist.

**13.** Verfahren nach einem der Ansprüche 10 bis 12, das ebenfalls einen Schritt der Herstellung eines Keils (CL) aufweist, um das Leiterband (RC) von der Grundplatte (PM) entfernt zu halten.

**14.** Verfahren nach Anspruch 13, wobei der Schritt der Herstellung eines Keils (CL) das Aufbringen eines Wachstropfens in flüssigem Zustand zwischen dem Leiterband (RC) und der Grundplatte (PM) und sein nachfolgendes Härten aufweist.

**15.** Verfahren nach einem der Ansprüche 10 bis 14, das ebenfalls einen Schritt des Einbaus auf das dielektrische oder Halbleiter-Substrat (SB) einer Vorrichtung zur Erzeugung (GEN) und/oder Erfassung (DET) eines elektromagnetischen Signals einer Frequenz zwischen 100 GHz und 3 THz aufweist, wobei die Vorrichtung mit der vom Band (RC) und von der Grundplatte (PM) gebildeten Strahlungsstruktur (SR) durch den planaren Wellenleiter (G) verbunden ist.

**Claims**

**1.** An integrated antenna for transmitting or receiving radiation in a frequency range from 100 GHz to 3 THz, **characterized in that** it comprises:

    • a conductive ground plane (PM) deposited on a so-called top surface (S) of a dielectric or semiconductor substrate (SB);
    • a conductive ribbon (RC) extending above said ground plane (PM) and forming an angle (β) therewith, so as to form a radiating structure (SR) of the transverse electromagnetic wave horn type; and
    • a planar waveguide (G) comprising at least first (BC1) and second (BC2) conductive strips formed on said top surface of the substrate, and connected respectively to said conductive ribbon (RC) and to said conductive ground plane (PM).

**2.** An antenna according to claim 1, wherein the width (W) of said conductive ribbon (RC) and its distance (H) from said ground plane (PM) vary in a longitudinal direction (x), the ratio between said width and said distance being selected so as to achieve impedance matching between said planar waveguide (G) and the radiating structure (SR) formed by the ribbon and the ground plane.

**3.** An antenna according to claim 2, wherein the ratio of the width (W) of the conductive ribbon over its distance (H) from the ground plane is maintained constant over at least a fraction of the length of said conductive ribbon.

**4.** An antenna according to claim 3, wherein the width (W) of said conductive ribbon and its distance (H) from said ground plane increase linearly along said longitudinal direction (x).

**5.** An antenna according to any of the preceding claims, wherein said planar waveguide (G) also includes a third conductive strip (BC3), also connected to said ground plane (PM), the second (BC2) and third (BC3) conductive strips being disposed symmetrically on either side of said first (BC1) conductive strip.

**6.** An antenna according to any of the preceding claims, also including at least one spacer (CL) for holding said conductive ribbon spaced apart from said ground plane.

**7.** A terahertz transmitter comprising:

    • an antenna according to any of the preceding claims; and
    • at least one generator device (GEN) for generating an electromagnetic signal at a frequency lying in the range 100 GHz to 3 THz, and integrated on the same dielectric or semiconductor substrate (SB) as the antenna;
    • the planar waveguide (G) of the antenna being arranged to convey said electromagnetic signal from the generator device (GEN) to the radiating structure (SR) formed by the ribbon (RC) and the ground plane (PM).

8. A terahertz receiver comprising:

   • an antenna according to any claim 1 to 6; and
   • at least one detector device (DET) of an electromagnetic signal of frequency lying in the range 100 GHz to 3 THz, and integrated on the same dielectric or semiconductor substrate (SB) as the antenna;
   • the planar waveguide (B) of the antenna being arranged to convey said electromagnetic signal from the radiating structure (SR) formed by the ribbon (RC) and the ground plane (PM) to the detector device (DET).

9. A terahertz spectrometer comprising:

   • a terahertz radiation transmitter (EM) according to claim 7, of the photoconduction type;
   • a terahertz radiation receiver (DE) according to claim 8, also of the photoconduction type, arranged to receive terahertz radiation generated by said transmitter after the radiation has passed through a region (CA) suitable for containing a sample for analysis;
   • a first pulsed laser source (L1);
   • second (L2) and third (L3) continuous laser sources, at least one of them being tunable, the frequency difference between the radiation emitted by said second and third laser sources being capable of varying within a range from 100 GHz to 3 THz; and
   • an optical setup for selectively directing either the radiation emitted by said first laser source (L1), or a superposition of the radiation emitted by said second (L2) and third (L3) laser sources onto photoconductive zones (GEN, DET) of said transmitter and receiver;
   • said optical setup including a delay line (LR) for introducing a variable time offset between the laser pulses emitted by said first source (L1) and directed to a photoconductive zone (GEN) of said transmitter (EM), and laser pulses likewise emitted by said first laser source (L1) and directed towards a photoconductive zone (DET) of said receiver (DE).

10. A method of fabricating an antenna according to any claim 1 to 6, comprising the following steps:

    • fabricating a ground plane (PM) and a planar waveguide (G) presenting at least two conductive strips, one of which is connected to said ground plane, by depositing a first layer of metallization (ME) on a so-called top surface (S) of a dielectric or semiconductor substrate (SB);
    • depositing a sacrificial layer (SAC) on said ground plane (PM);
    • fabricating a conductive ribbon (RC) connected to at least one other conductive strip of said waveguide by depositing a second layer of metallization (ME2) on said sacrificial layer (SAC); and
    • etching said sacrificial layer (SAC) to release said conductive ribbon (RC).

11. A method according to claim 10, also including, prior to depositing said layer of metallization (ME), a step of making openings (O) in said sacrificial layer (SAC) to enable electrical and mechanical connections to be made between the conductive ribbon (RC) and said other conductive strip of said planar waveguide (G).

12. A method according to any one claim 10 or 11, also including a step of lifting said conductive ribbon (RC).

13. A method according to any one claim 10 to 12, also including a step of fabricating a spacer (CL) to hold said conductive ribbon (RC) spaced apart from said ground plane (PM).

14. A method according to claim 13, wherein said step of fabricating a spacer (CL) comprises depositing a droplet of wax in the liquid state between the conductive ribbon (RC) and the ground plane (PM), and then hardening it.

15. A method according to anyone claim 10 to 14, also including a step of integrating on said dielectric or semiconductor substrate (SB) a device for generating (GEN) and/or detecting (DET) an electromagnetic signal of frequency lying in the range 100 GHz to 3 THz, said device being connected to the radiating structure (SR) formed by the ribbon (RC) and the ground plane (PM) by said planar waveguide (G).

**FIG.1**

**FIG.2**

**FIG.3**

FIG.4

FIG.5

FIG.6

FIG.7A

FIG.7B

FIG.7C

FIG.7D

FIG.7E

FIG.7F

FIG.7G.

**FIG. 8**

**FIG. 9**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5789750 A
- US 4855749 A

- US 20060152412 A

**Littérature non-brevet citée dans la description**

- **G. M. REBEIZ.** Millimeter-Wave and Terahertz Integrated Circuit Antennas. *Proceedings of the IEEE,* 1992, vol. 80 (11), 1748
- **V. LUBECKE et al.** Micromachining for Terahertz Applications. *IEEE Trans. on Microwave Theory and Tech.,* 1998, vol. 46 (11), 1821
- **R.T. LEE et al.** *IEEE Transaction on antennas and propagation,* 2004, vol. 52, 315
- **J.-C. LANGER et al.** Micromachined Reconfigurable Out-of-Plane Microstrip Patch Antenna Using Plastic Deformation Magnetic Actuation. *IEEE Microwave and Wireless Components Letters,* 2003, vol. 13 (3), 120
- **J.-F. LAMPIN et al.** Détection of picosecond electrical pulses using the intrinsic Franz-Keldysh effect. *Appl. Phys. Lett.,* 2001, vol. 78, 4103

- **L. DESPLANQUE et al.** Génération and détection of terahertz pulses using post-processing bonding of low-temperature-grown GaAs and AlGaAs. *Appl. Phys. Lett.,* 2004, vol. 82, 2049
- **E. R. BROWN ; K. A. MCLNTOSH ; K. B. NICHOLS ; C. L. DENNIS.** Photomixing up to 3.8 THz in low-temperature-grown GaAs. *Applied Physics Letters,* 1995, vol. 66, 285
- **G. MOURET ; S. MATTON ; R. BOCQUET ; D. BIGOURD ; F. HINDLE ; A. CUISSET ; J. -F. LAMPIN ; D. LIPPENS.** Anomalous dispersion measurement in terahertz frequency region by photomixing Applied Physics. *Letters,* 2006, vol. 88, 181105